# EUROPÄISCHE PATENTANMELDUNG

(11) **EP 1 598 715 A1**
(43) Veröffentlichungstag der Anmeldung: **23.11.2005**
(21) Anmeldenummer: 04011812.7
(22) Anmeldetag: 18.05.2004
(51) Int. Cl.: G05B 19/05

(54) **Verfahren zur Erfassung der Kommunikationslast eines Automatisierungssystems**

(71) Anmelder: SIEMENS AKTIENGESELLSCHAFT, 80333 München (DE)
(72) Erfinder: Becker, Peter, 76571 Gaggenau (DE)

(57) **Zusammenfassung**

Die Erfindung betrifft ein Verfahren zur Erfassung der Kommunikationslast eines Automatisierungssystems (1). Darüber hinaus betrifft die Erfindung ein Automatisierungssystem (1), welches zur Ausführung dieses Verfahrens ausgebildet ist. Um die Kommunikationslast eines Automatisierungssystems (1) auf besonders einfache und wenig aufwendige Art und Weise zu ermitteln, wird ein Zuordnen wenigstens eines Kontrollraumes (7, 8, ...) zu einer Systemeinheit (3, 4, 6) des Automatisierungssystems (1) und ein Erfassen von in den Kontrollraum (7, 8, ...) eintretenden und/oder aus dem Kontrollraum (7, 8, ...) austretenden Kommunikationsereignissen vorgeschlagen. Anhand der so ermittelten Kommunikationslast können differenzierte Gegenmaßnahmen bei Überlast oder dergleichen ergriffen werden.

## Beschreibung

Die Erfindung betrifft ein Verfahren zur Erfassung der Kommunikationslast eines Automatisierungssystems. Darüber hinaus betrifft die Erfindung ein Automatisierungssystem, welches zur Ausführung dieses Verfahrens ausgebildet ist.

In modernen Automatisierungssystemen spielt die Systembelastung durch Kommunikation zwischen der Steuerung (SPS) einerseits und remoten Kommunikationspartner andererseits eine immer größere Rolle. Oft werden bereits eigene Kommunikationsprozessoren zur Bewältigung der Kommunikationsaufgaben eingesetzt, welche die eigentlichen Steuerprozessoren entlasten.

Tritt eine Überlastung des Automatisierungssystems durch Kommunikation auf, muss durch Recherchen im Anwenderprogramm, der SPS und/oder bei den remoten Kommunikationspartnern oder gar durch aufwändige Bus-Score-Aufzeichnungen die Ursache der Überlastung ermittelt werden. Dabei sind insbesondere dann qualitative Aussagen schwer zu treffen, wenn die Kommunikationslast nicht zyklisch auftritt.

Bei der Ermittlung der Ursachen wird häufig mit der Versuch-Irrtum-Methode gearbeitet, was einen wenig erfolgversprechenden und zudem zeitraubenden Ansatz darstellt.

Aufgabe der Erfindung ist es, die Kommunikationslast eines Automatisierungssystems auf besonders einfache und wenig aufwendige Art und Weise zu ermitteln.

Diese Aufgabe wird durch ein Verfahren nach Anspruch 1 bzw. durch ein Automatisierungssystem nach Anspruch 14 bzw. durch ein Computerprogramm nach Anspruch 17 gelöst.

Ein Grundgedanke der Erfindung ist es, einer Systemeinheit einen Kontrollraum zuzuordnen und zur Erfassung der Kommunikationslast sämtliche in den Kontrollraum eintretenden und/oder aus dem Kontrollraum austretenden Kommunikationsereignisse zu erfassen.

Unter einem Kontrollraum wird in diesem Zusammenhang eine virtuelle, abgeschlossene Entität verstanden, welche die jeweiligen Kommunikationsereignisse durchlaufen müssen. Mit anderen Worten tritt während einer Kommunikation ein Kommunikationsereignis in einen bestimmten Kontrollraum ein und verlässt diesen auch wieder. Kommunikationsereignisse im Sinne der Erfindung umfassen Kommunikationsaufträge, Meldungen, Quittungen und deren Folgeereignisse etc., die zwischen Sender und Empfänger in einzelnen Phasen bearbeitet werden. D.h. jede dieser Phasen wird durch ein Kommunikationsereignis gestartet, z.B. durch einen Interrupt eines Betriebssystems. Anders ausgedrückt: Zwischen Sender und Empfänger durchlaufen Telegramme, wie z.B. Kommunikationsaufträge, Meldungen, Quittungen, etc., unterschiedliche, in der Regel asynchrone, Bearbeitungsphasen, welche jeweils durch Kommunikationsereignisse im Sinne der Erfindung gestartet werden. Diese Phasen können, müssen aber nicht mit einem Kontrollraum identisch sein.

Nachfolgend werden Kommunikationsereignisse je nach Kontext auch allgemein als Kommunikationsaufträge oder kurz Aufträge bezeichnet.

Entgegen dem aus dem Stand der Technik bekannten Zeiterfassungs-Ansatz, der darauf beruhte, die benötigte Zeitdauer für die Abarbeitung eines Kommunikationsereignisses zu ermitteln, werden also lediglich Eingangs- und Ausgangs-Ereignisse registriert. Während bisher nur qualitative Aussagen über die Kommunikationslast getroffen werden konnten, ist damit auch eine quantitative Bewertung möglich.

Eine derartige Erfassung kann mit vergleichsweise einfachen Mitteln und ohne einen großen Aufwand an Rechenleistung verwirklicht werden.

Wird eine hohe Kommunikationslast festgestellt, kann auf einfache Art und Weise ermittelt werden, ob die Kommunikationslast durch das Automatisierungssystem durch Versenden von Kommunikationsereignissen oder durch einen remoten Kommunikationspartner erzeugt wird.

Mit der vorliegenden Erfindung wird es möglich, die zeitlichen Verhältnisse der Kommunikationslast sowie die Belastung hinsichtlich einzelner Kommunikationsfunktionen zu bewerten. Ganz besonders vorteilhaft ist dies im Überlastfall.

Mit der vorliegenden Erfindung ist durch eine detaillierte Analyse, ein frühzeitiges Erkennen möglicher Problembereiche sowie die Ausführung geeigneter Gegenmaßnahmen Kommunikationsprobleme, wie sie bei Überlastung auftreten, möglich.

Besonders vorteilhaft ist dies in hochverfügbaren Systemen, da dort durch Synchronisationen mit parallel arbeitenden Steuerungen auch die Kommunikationsperformance deutlich abgesenkt wird und dadurch der Überlastungszeitpunkt deutlich früher auftritt, d.h. die Vorwarnzeit der Überlastung ist deutlich kürzer.

Mit der vorliegenden Erfindung wird die Grundlage für ein zielgerichtetes Vorgehen bei der Lösung von Kommunikationsproblemen in Automatisierungssystemen, insbesondere bezüglich Überlast und Reaktionszeit, gelegt. Gleichzeitig können die mit der Erfindung erzielten Ergebnisse auch für Optimierungsaufgaben verwendet werden.

Vorteilhafte Ausgestaltungen der Erfindung sind in den Unteransprüchen beschrieben.

Insbesondere kann es sich bei der Systemeinheit, welcher ein Kontrollraum im Sinne der Erfindung zugeordnet wird, um einen Kommunikationsprozessor, eine Kommunikationsklasse, eine Kommunikationsfunktion oder eine Kommunikationsverbindung oder um eine beliebige andere physikalische oder logische Einheit eines Automatisierungssystems handeln. Die Erfassung der Kommunikationslast kann, anders ausgedrückt, je nach Anwendung in einer beliebigen Tiefe der Systemhierarchie des Automatisierungssystems erfolgen. Dadurch kann die zeitliche Verteilung von Kommunikationslast im Detail nachvollzogen werden.

In einer vorteilhaften Ausführungsform der Erfindung ist es vorgesehen, die erfasste Kommunikationslast als Grundlage für eine Optimierung des Automatisierungssystems zu nutzen. Hierzu wird gemäß einer besonders bevorzugten Ausführungsform die in dem Automatisierungssystem zur Verfügung stehende Rechenleistung verteilt. Die Verteilung erfolgt dabei in Abhängigkeit von der Kommunikationslast der Systemeinheit. Eine weitere vorteilhafte Ausführungsform der Erfindung sieht vor, die Anzahl der eintreffenden Kommunikationsereignisse in Abhängigkeit von der Kommunikationslast der Systemeinheit zu beeinflussen.

Ein weiterer Aspekt der Erfindung betrifft ein Computerprogramm mit Rechenbefehlen zur Ausführung des erfindungsgemäßen Verfahrens. Dabei ist ein Rechner, beispielsweise ein Personalcomputer, vorgesehen, der derart ausgebildet ist, dass das erfindungsgemäße Verfahren abläuft, wenn das entsprechende Computerprogramm auf dem Rechner ausgeführt wird.

Die vorliegende Erfindung wird nachfolgend anhand von Ausführungsbeispielen beschrieben, die mit Hilfe von Zeichnungen näher erläutert werden. Hierbei zeigen:
- FIG 1: eine vereinfachte schematische Darstellung eines Automatisierungssystems,

- FIG 2: eine schematische Darstellung des Verfahrensablaufes anhand eines Kontrollraumes für einen Kommunikationsprozessor,
- FIG 3: eine Belastungskurve für den Kontrollraum aus FIG 2,

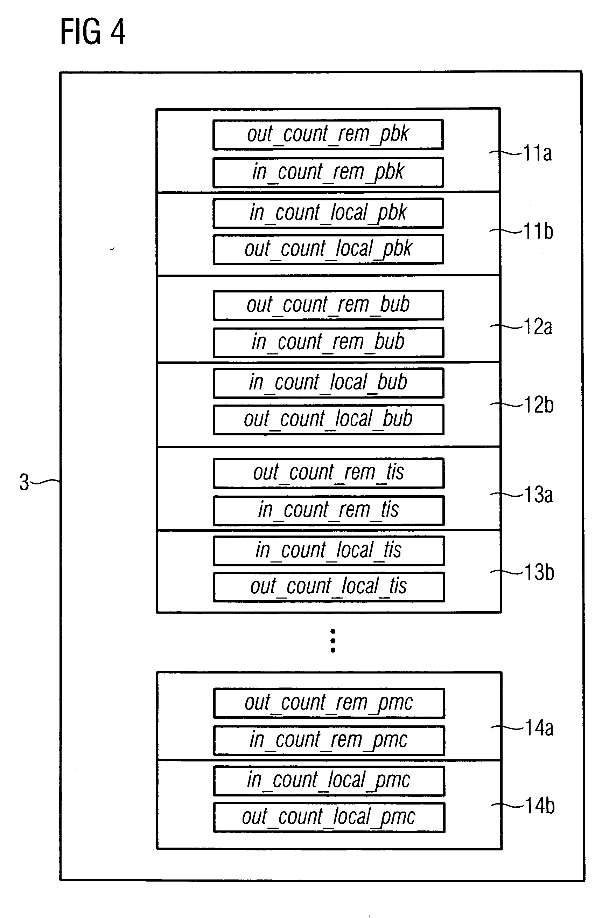

- FIG 4: mehrere Kontrollräume für einen Kommunikationsprozessor,
- FIG 5: eine schematische Darstellung des Verfahrensablaufes anhand eines Beispielkontrollraumes.

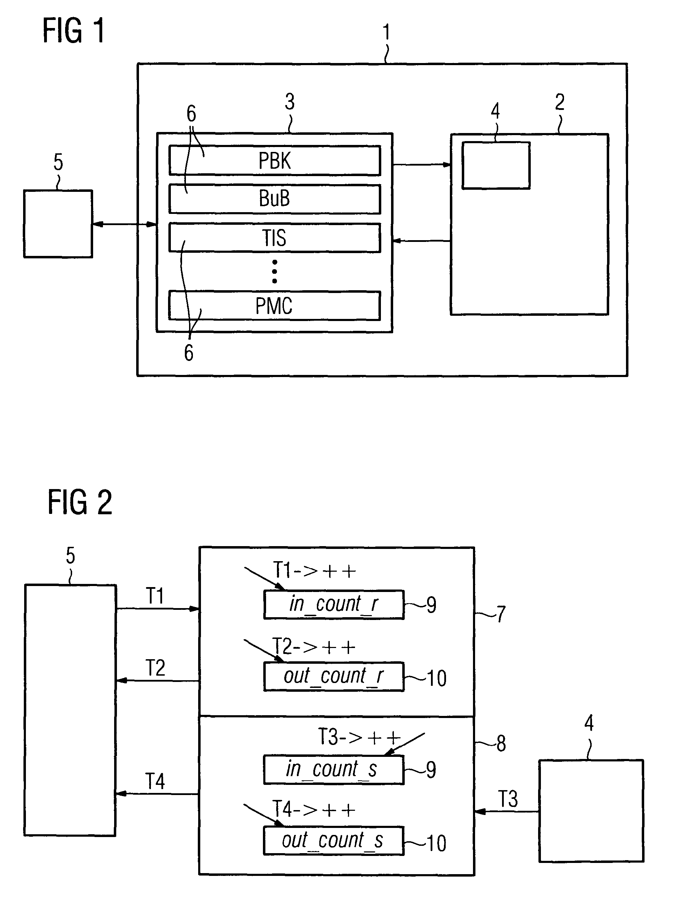

In FIG 1 ist schematisch ein Automatisierungssystem 1 dargestellt. Die SPS weist neben einem Steuerungsprozessor 2 zur Bearbeitung von Steuerungsaufgaben einen zusätzlichen Kommunikationsprozessor 3 zur Bearbeitung von Kommunikationsaufgaben aufweist. Die Kommunikationsaufgaben werden in einem solchen System somit weitestgehend parallel zu den Steuerungsaufgaben des Steuerungsprozessors 2 bearbeitet.

Der Steuerungsprozessor 2 ist zu diesem Zweck mit dem Kommunikationsprozessor 3 verbunden. Der Steuerungsprozessor 2 umfasst mehrere Schnittstellen zum Kommunikationsprozessor 3, u. a. eine Auftragsschnittstelle 4 für eingehende Kommunikationsereignisse (Aufträge) des Kommunikationsprozessors 3. Die Auftragsschnittstelle 4 synchronisiert die von dem Kommunikationsprozessor 3 eintreffenden Kommunikationsereignisse (Aufträge). Ein Anwender des Steuerungsprozessors 2 kann der Auftragsschnittstelle 4 durch Projektierung der Steuerungsseite Rechenleistung bzw. Rechenzeit für Kommunikationsaufgaben zuweisen.

Der Kommunikationsprozessor 3 ist andererseits mit remoten Kommunikationspartnern 5, wie beispielsweise anderen Kommunikationssystemen, Sensoren oder Aktoren, verbunden, welche Kommunikationsereignisse an das Automatisierungssystem 1 senden. Zu deren Bearbeitung kommen verschiedene Kommunikationsfunktionen zur Anwendung, die in Kommunikationsklassen 6 zusammengefasst sind. Beispiele solcher Kommunikationsklassen 6 sind: Programmierte Bausteinkommunikation (PBK), Lese- und Schreibdienste (BuB), Alarmbearbeitung (PMC), Objektverwaltungssystem-Funktionen (OVS), TIS usw. Diese Kommunikationsklassen 6 besitzen unterschiedliche Bearbeitungsprioritäten.

Gemäß einer ersten Ausführungsform der Erfindung wird der Kommunikationsprozessor 3 als Systemeinheit aufgefasst, der zwei Kontrollräume 7, 8 zugeordnet sind, vgl. FIG 2. In diesen Kontrollräumen 7, 8 werden Kommunikationsereignisse differenziert nach ihren Verursachern gezählt. Dabei bearbeitet der eine Kontrollraum 7 nur Kommunikationsereignisse, die im Zusammenhang mit remoten Partnern (r) 5 stehen, und der andere Kontrollraum 8 nur Kommunikationsereignisse, die im Zusammenhang mit der Steuerung (s), also dem Steuerungsprozessor 2 stehen. Die Zählung erfolgt dabei jeweils, wenn die Kommunikationsereignisse in den Kontrollraum 7, 8 eintreten (in_count) und wenn sie den Kontrollraum 7, 8 (out_count) verlassen. Entsprechend sind für jeden Kontrollraum 7, 8 Eingangszähler 9 und Ausgangszähler 10 vorgesehen. Als Zähler 9, 10 werden vorzugsweise Datenzellen verwendet, die inkrementiert bzw. dekrementiert werden können.

Der dem Kontrollraum 7 zugewiesene Eingangszähler 9 wird bei einem Auftragsstart eines remoten Kommunikationspartners zum Zeitpunkt T1, d.h. dann, wenn ein Kommunikationsereignis (Auftrag) im Kontrollraum eingetroffen ist, inkrementiert. Bei Auftragsende zum Zeitpunkt T2, d.h. wenn die Bearbeitung durch diesen Kontrollraum abgeschlossen ist, wird der Ausgangszähler des Kontrollraums 7 inkrementiert. Der dem Kontrollraum 8 zugewiesene Eingangszähler 9 wird bei einem Auftragsstart eines des Steuerungsprozessors 2 zum Zeitpunkt T3 inkrementiert. Bei Auftragsende zum Zeitpunkt T4 wird der Ausgangszähler dieses Kontrollraums 8 inkrementiert.

In einer weiteren Ausführungsform ist das Inkrementieren des Ausgangszählers des Kontrollraumes 7 und des Eingangszählers des Kontrollraumes 8 direkt miteinander gekoppelt, so dass ein Auftrag lückenlos mittels Eingangszähler und Ausgangszähler der einzelnen Kontrollräume verfolgt werden kann.

Liest man die Zähler 9, 10 zu einem bestimmten Zeitpunkt aus, so stellt die Differenz der Werte von Eingangszähler (in_count_x) 9 und Ausgangzähler (out_count_x) 10 die momentane Auftragsbelastung durch den jeweiligen Verursacher dar. Diese Auftragslast stellt die aktuelle Kommunikationsbelastung des Kontrollraumes 7, 8 dar. Die Erfindung nutzt mit anderen Worten einen neuartigen Ansatz, der darauf beruht, die Belastung des Kommunikationsprozessors 3 durch die Ermittlung der noch auszuführenden Aufträge zu definieren.

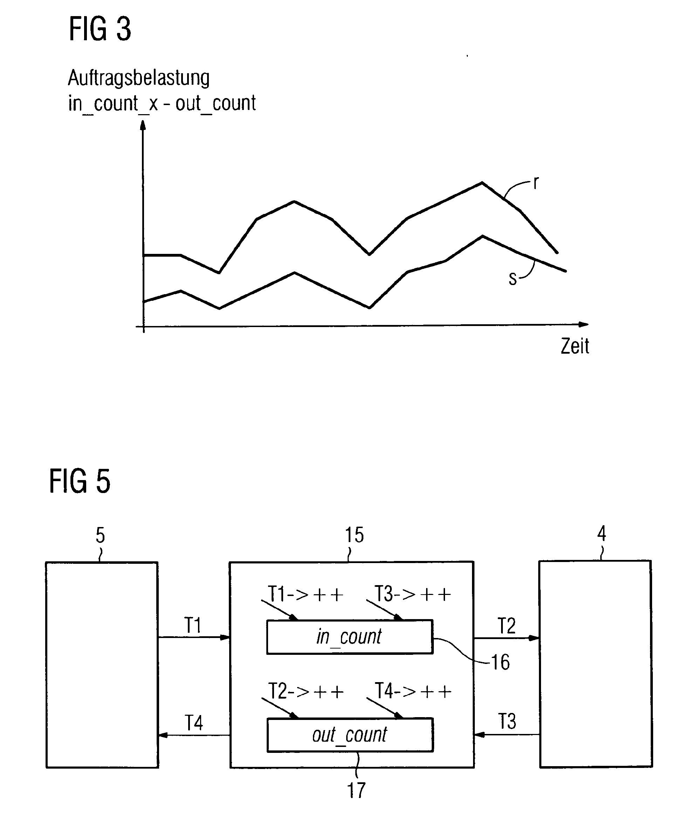

Durch zyklische Erfassung der Zählerwerte kann eine Belastungskurve erstellt werden, wie sie beispielhaft in FIG 3 dargestellt ist. Hieraus lässt sich die Anzahl der Aufträge pro Zeiteinheit (Abtastzeit) und damit die aktuelle Kommunikationslast des Kommunikationsprozessors 3 bzw. dessen Leistungsfähigkeit ermitteln. Darüber hinaus ist auch der zeitliche Verlauf der Auftragsbelastung bestimmbar. Die Frage, wie lange ein bestimmter Kontrollraum 7,8 belastet ist, kann mit anderen Worten ebenso beantwortet werden, wie die Frage, wie viele Kommunikationsereignisse insgesamt den Kommunikationsprozessor 3 belastet haben.

Für Anwendungen, in denen eine Unterteilung in zwei Kontrollräume für eine quantitative Bewertung zu grob ist, kann eine feinere Differenzierung vorgenommen werden. Gemäß einer weiteren Ausführungsform der Erfindung ist daher eine Gruppe von Kontrollräumen 11, 12, 13, 14 vorgesehen, wobei die Kontrollräume den einzelnen Kommunikationsklassen 6 (z.B. PBK, BuB, ...) des Kommunikationsprozessors 3 zugeordnet sind.

Jede Kommunikationsklasse 6 differenziert dabei ihre Zähler zum Beispiel bezüglich der Herkunft der Kommunikationsereignisse, also zum einen in Zähler für remote Kommunikationspartner 5 (in_count_rem_x / out_count_rem_x) und zum anderen in Zähler für den Steuerungssprozessor 2 (in_count_local_x /out_count_local_x). Dabei bildet jede Kommunikationsklasse eigene Kontrollräume 11a, 11b, 12a, 12b, ... in denen die Kommunikationsereignisse nach dem gleichen Schema gezählt werden.

In einer weiteren Ausführungsform der Erfindung ist dieses Zählverfahren auf die einzelnen Kommunikationsfunktionen einer Kommunikationsklasse 6 herunter gebrochen. Mit der Summe der jeweiligen Zähler lassen sich dabei stets die Zähler der übergeordneten Differenzierungsebene (z.B. out_count_rem_pbk = Σ out_count_rem_pbk_Dienste) bilden.

Ist eine derart feine Differenzierung nicht erwünscht, beispielsweise wegen des vergleichsweise höheren Aufwandes, ist es vorgesehen, lediglich ein Zählen der einzelnen Funktionsaktivierungen vorzunehmen. Mit anderen Worten wird dann nur der Auftragsstart gezählt. Bereits damit lässt sich beurteilen, welche Funktionen einer Kommunikationsklasse 6 besonders intensiv genutzt werden. Somit ist eine bessere Differenzierung einer bestehenden Kommunikationslast möglich.

Gemäß einer weiteren Ausführungsform der Erfindung ist eine Differenzierung der Kommunikationsereignisse hinsichtlich der Kommunikationsverbindungen vorgesehen. Damit wird es möglich, die Kommunikationslast bezüglich einzelner Kommunikationsteilnehmer zu differenzieren. Hierzu sind in jeder Kommunikationsklasse 6 (z.B. PBK) und für jede Verbindung Zähler für die Senderichtung (out_count_local_pbk_id) sowie Zähler für die Empfangsrichtung (in_count_rem_pbk_id) vorgesehen (nicht abgebildet). Diese Ausführungsform ist insbesondere bei festprojektierten Verbindungen möglich, da für den Anwender diese Verbindungen transparent sind.

Gemäß einer weiteren Ausführungsform der Erfindung ist es vorgesehen, die Anzahl der aufgestauten, momentan nicht bearbeitbaren Kommunikationsereignisse, die sich an der Auftragsschnittstelle 4 (K7_kom) des Steuerungsprozessors 2 aufgestaut haben, zu ermitteln. Zu diesem Zweck werden in einem der Auftragsschnittstelle 4 zugeordneten Kontrollraum die ankommenden Kommunikationsereignisse in einem Eingangszähler (in_count_K7_kom) und die abgehenden, bearbeiteten Kommunikationsereignisse in einem Ausgangszähler (out_count_K7_kom) gezählt (nicht abgebildet).

Die die Auftragsschnittstelle durchlaufenden Kommunikationsereignisse werden gemäß einer weiteren Ausführungsform der Erfindung bezüglich dem remoten oder lokalen Ursprung der Kommunikationsereignisse weiter differenziert. Darüber hinaus kann auch eine Differenzierung nach Kommunikationsklassen 6 vorgesehen sein.

Gemäß einer weiteren Ausführungsform der Erfindung wird ein Kontrollraum bezüglich einer Ressourcenanforderung, beispielsweise einer Pufferanforderung, um ein Telegramm zu versenden, definiert. In diesem Fall ist ein Eingangszähler (in_count_ress_x) vorgesehen, der bei einer Ressourcenanforderung, sofern keine direkte Zuteilung erfolgt, inkrementiert und ein Ausgangszähler (out_count_ress_x), der bei einer späteren Zuteilung der Ressource inkrementiert wird (nicht abgebildet). Der Zählerstand gibt an, wie oft eine Ressource nicht direkt zugeteilt wird. Somit kann festgestellt werden, ob und mit welcher Ressource der Kommunikationsprozessor 3 an der Leistungsgrenze arbeitet. Vorzugsweise wird diese Ausführungsform auf die einzelnen Kommunikationsklassen 6 angewendet. Damit kann festgestellt werden, welche Kommunikationsklasse 6 mit Warten auf Ressourcen belastet wird.

Im Folgenden wird anhand von FIG 5 ein Zählvorgang näher erläutert. Im Beispiel wird ein Kontrollraum 15 für die Kommunikationsklasse BuB (Bedien und Beobachten) betrachtet.

In dem Kontrollraum 15 trifft ein Leseauftrag eines remoten Kommunikationspartners 5 ein (Zeitpunkt T1, Auftragsstart).

Der Eingangszähler 16 wird inkrementiert. Sobald die notwendigen Ressourcen vorhanden sind, erfolgt eine Vorverarbeitung. Anschließend verlässt der Auftrag den Kontrollraum 15 in Richtung Auftragsschnittstelle 4 des Steuerungsprozessors 2 (Zeitpunkt T2) und der Ausgangszähler 17 wird inkrementiert.

Nachdem die Auftragsdaten auf dem Steuerungsprozessor 2 gelesen wurden, tritt der Auftrag wieder in den Kontrollraum 15 ein (Zeitpunkt T3). Wieder wird der Eingangszähler 16 inkrementiert. Der Auftrag wird, sofern die notwendigen Ressourcen vorhanden sind, weiterverarbeitet und verlässt mit einer Lese-Quittung den Kontrollraum 15 (Zeitpunkt T4, Auftragsende). Der Ausgangszähler 17 wird wieder inkrementiert.

Vorzugsweise sind die Zähler nicht ausschließlich auf einer Hierarchieebene des Automatisierungssystems 1 implementiert. Stattdessen sind Kontrollräume beispielsweise auf Klassenebene und Funktionsebene vorgesehen. Bei der Bearbeitung eines eintreffenden Kommunikationsereignisses werden dann die entsprechenden Zähler nach und nach durch entsprechende Programmaufrufe inkrementiert bzw. dekrementiert, im Beispiel zunächst auf der Ebene einer Kommunikationsklasse 6 und anschließend, innerhalb dieser Kommunikationsklasse 6, auf Funktionsebene. Die Zuordnung der Kontrollräume erfolgt gemäß einer weiteren Ausführungsform der Erfindung derart, dass einer oder mehreren Schichten des ISO-OSI-Schichtenmodells ein oder mehrere Kontrollräume zugeordnet werden.

Zum Erfassen bzw. Auslesen der Zählerwerte sind prinzipiell zwei Vorgehensweisen sinnvoll. Entsprechend einer ersten Variante werden die Werte unter Nutzung eines standardisierten Kommunikationsmechanismus, beispielsweise mit einem zyklisch gestarteten Leseauftrag, von einem Auswertegerät, beispielsweise einem Programmiergerät oder einem Personalcomputer, aus dem Automatisierungssystem gelesen. Dort können die Daten dann graphisch aufbereitet und einem Anwender dargestellt werden. Da das Lesen der Daten selbst zu einer Kommunikationslast führt und das Messergebnis beeinflusst, ist dieses Verfahren nur bei längeren Lesezyklen geeignet.

In einer weiteren Variante werden die Zählerwerte mit einem vorgegebenen Zyklus in einen Umlaufpuffer eingetragen. Die Erfassungszyklen der Zähler können damit deutlich abgesenkt (z.B. alle 50 ms) und die Leseeffizienz gesteigert werden. Das Auswertegerät kann den Umlaufpuffer effizienter auslesen, da mit einem Lesevorgang mehr Daten gelesen werden können als im ersten Fall.

In einer weiteren Ausführungsform der Erfindung werden Trigger definiert, wie beispielsweise "in einer Kommunikationsklasse stauen sich mehr als eine vorgegebene Anzahl von Kommunikationsereignissen". Trifft das Ereignis ein, ist es vorgesehen, dass die Zählerwerte in einem Umlaufpuffer erfasst und nicht überschrieben werden. Dadurch sind eine Auswertung der Lastverteilung des Kommunikationsprozessors 3 und eine Analyse sporadischer Kommunikationslastfälle möglich.

Insbesondere Fällen, in denen eine Kommunikationsklasse gerade so viele Kommunikationsereignisse bearbeitet, um eine nieder priore Kommunikationsklasse auszubremsen, können mit dem erfindungsgemäßen Verfahren erfasst und geeignete Gegenmaßnahmen ergriffen werden. Ein Aufstauen von Kommunikationsereignissen in solchen Kommunikationsklassen und eine damit verbundene Beeinträchtigung der Reaktionszeit in dieser Kommunikationsklasse, kann dadurch vermieden werden.

In einer Ausführungsform der Erfindung wird die Ermittlung der Kommunikationslast mit dem Task-System, welches das Betriebssystem des Automatisierungssystems zur Verfügung stellt, realisiert. Somit sind keine Eingriffe in die Kernfunktionen des Betriebssystems notwendig. Anders ausgedrückt ist die Ermittlung der Zählwerte vorzugsweise als Bestandteil der Betriebsystemapplikationen realisiert. Es erfolgt nur eine minimale Belastung der Rechenleistung des Systems.

Gemäß einer weiteren Ausführungsform der Erfindung werden die bei der Erfassung der Kommunikationslast erhaltenen Informationen zur Optimierung des Automatisierungssystems 1 genutzt. Hierzu werden die Zählerwerte vorzugsweise einem Anwenderprogramm, beispielsweise über eine Systemfunktion, zur Verfügung gestellt.

Gemäß einer Ausführungsform der Erfindung ist es hierzu vorgesehen, das Automatisierungssystem 1 derart auszugestalten, dass Rechenleistung und damit Rechenzeit auf die einzelnen Kontrollräume (z.B. Kommunikationsklassen) verteilt werden kann. Insbesondere ist dies derart verwirklicht, dass ein Anwender die Möglichkeit erhält, anhand einer Eingangsinformation, beispielsweise einer Belastungskurve, Rechenleistung zu verteilen. Damit ist er in der Lage, regelnd auf die Bearbeitung der von den einzelnen Belastungsquellen stammenden Kommunikationsereignisse einzuwirken, indem er diese Bearbeitung verzögert oder beschleunigt. Die Verteilung der Rechenleistung wird, gemäß einer weiteren Ausführungsform, automatisch durch das Automatisierungssystem 1 selbst vorgenommen, vorzugsweise mit Hilfe eines entsprechend angepassten Computerprogramms .

Mit anderen Worten bildet die ermittelte Anzahl der noch auszuführenden Aufträge die Basis für eine anwenderspezifische Verteilung der Kommunikationsrechenleistung.

In einer weiteren Ausführungsform der Erfindung ist es vorgesehen, dass die Kommunikationsklasse Programmierte Baustein Kommunikation (PBK) als Lastquelle auf Lastfälle reagiert. Die PBK erhöht bzw. senkt die Untersetzung der Kommunikationsfunktionen programmgesteuert, also algorithmisch, um Kommunikationslast zu senken bzw. nicht ausgelastete Kapazität auszunutzen.

Das Zuweisen von Rechenleistung auf einzelne Kontrollräume erfolgt entsprechend einer weiteren Ausführungsform derart, dass differenziert Rechenleistung dort konzentriert wird, wo eine schnelle Kommunikationsreaktionszeit benötigt wird. Vom Kommunikationsprozessor 3 wird dabei vorzugsweise eine "Notlauf-Rechenzeit" für jede Komponente vorgehalten.

Sind der Auftragsschnittstelle 4 des Steuerungsprozessors 2 Zähler zugeordnet, kann bei einem zielgerichteten Verteilen der Rechenleistung sofort die Reaktion der Steuerung erkannt werden. Somit ist eine umgehende Kontrolle der quantitativen Wirkung von Gegenmaßnahmen möglich.

Das erfindungsgemäße Verteilen der Rechenleistung ist sowohl für priorisierte, als auch für nicht priorisierte Bearbeitung von Kontrollräumen, z.B. von Kommunikationsklassen 6, anwendbar. Grundlage hierbei ist, dass die Rechenleistung nicht zeitlich aufgeteilt wird. Vielmehr orientiert sich die Verteilung der Rechenleistung an der Anzahl der Kommunikationsereignisse, die ein Kontrollraum bearbeiten darf. Damit wird das aus dem Stand der Technik bekannte Problem der Unterbrechungszeiten durch höher priore Bearbeitungseinheiten eines Betriebssystems umgangen. Vorteilhaft bei diesem Lösungsansatz ist, dass er ohne Eingriffe in das Betriebssystem realisiert werden kann, was bei einer Erfassung der genauen Zeitdauer, bei der z.B. die Unterbrechungszeiten durch höher priore Bearbeitungseinheiten eines Betriebssystems berücksichtigt werden, wie sie aus dem Stand der Technik bekannt ist, in der Regel nicht möglich ist.

Bei dem Verteilen von Rechenleistung wird gemäß einer besonders bevorzugten Ausführungsform der Erfindung durch einen Anwender des Automatisierungssystems oder automatisch, beispielsweise mit Hilfe eines entsprechenden Computerprogramms, die Anzahl der lokalen (x_local_count) und remoten (x_rem_count) Kommunikationsereignisse festgelegt, die ein bestimmter Kontrollraum x bearbeiten darf. Diese Werte werden den einzelnen Kontrollräumen als Variablen (x_local_count /x_rem_count) zur Verfügung gestellt.

Bearbeitet ein Kontrollraum x einen lokalen Auftrag, wird dieser Wert dekrementiert. Wird der Zähler x_rem_count Null, unterbleibt die Bearbeitung des nächsten, lokalen Auftrages. Die remoten Aufträge können dann weiter bearbeitet werden, bis auch der Zähler x_local_count Null wird.

Haben alle Kontrollräume ihre anstehenden Kommunikationsereignisse (Aufträge) bearbeitet, so dass z.B. bei einem priorisierten Bearbeitungssystem die nieder priorste Task (z.B. Idle-Task) gestartet wird, werden dort die Variablen mit dem vom Anwender vorgegebenen Wert neu initialisiert.

In einem nicht priorisierten System tritt dieser Zustand dann ein, wenn festgestellt wird, dass alle anstehenden Kommunikationsereignisse bearbeitet sind oder Kontrollräume zwar Kommunikationsereignisse zur Bearbeitung angestaut haben, aber ihre Bearbeitungszähler abgelaufen sind.

Gemäß einer weiteren Ausführungsform der Erfindung ist alternativ oder zusätzlich zu einer Verteilung von Rechenleistung auf verschiedene Kontrollräume des Automatisierungssystems eine Reduzierung der Kommunikationslast vorgesehen, insbesondere als Gegenmaßnahme bei Überlastfällen. Die Reduzierung erfolgt dabei vorzugsweise derart, dass die von einem remoten Kommunikationspartner 5 gesendeten Kommunikationsereignisse zeitgesteuert aufgenommen oder verarbeitet werden. In einer weiteren Implementierung ist es vorgesehen, den remoten Kommunikationspartner 5 derart zu beeinflussen, dass er die Anzahl der Kommunikationsereignisse reduziert. Auch diese Schritte werden vorzugsweise mit einem entsprechend ausgebildeten Rechner unter Ausführung eines Computerprogramms verwirklicht.

## Patentansprüche

1. Verfahren zur Ermittlung der Kommunikationslast eines Automatisierungssystems (1), mit den Schritten:
- Zuordnen wenigstens eines Kontrollraumes (7, 8,...) zu einer Systemeinheit (3, 4, 6) des Automatisierungssystems (1) und
- Erfassen von in den Kontrollraum (7, 8,...) eintretenden und/oder aus dem Kontrollraum (7, 8,...) austretenden Kommunikationsereignissen.

2. Verfahren nach Anspruch 1, **gekennzeichnet durch** ein Zuordnen eines Kontrollraumes (7, 8) zu einem Kommunikationsprozessor (3) des Automatisierungssystems (1).

3. Verfahren nach Anspruch 1 oder 2, **gekennzeichnet durch** ein Zuordnen eines Kontrollraumes (11, 12, 13, 14, 15) zu einer Kommunikationsklasse (6).

4. Verfahren nach einem der Ansprüche 1 bis 3, **gekennzeichnet durch** ein Zuordnen eines Kontrollraumes (7, 8,...) zu einer Kommunikationsfunktion.

5. Verfahren nach einem der Ansprüche 1 bis 4, **gekennzeichnet durch** ein Zuordnen eines Kontrollraumes (7, 8,...) zu einer Kommunikationsverbindung.

6. Verfahren nach einem der Ansprüche 1 bis 5, **dadurch gekennzeichnet, dass** das Erfassen der Kommunikationsereignisse zyklisch erfolgt.

7. Verfahren nach einem der Ansprüche 1 bis 6, **dadurch gekennzeichnet, dass** das Erfassen der Kommunikationsereignisse durch wenigstens einen Zähler (9, 10, 16, 17) erfolgt.

8. Verfahren nach einem der Ansprüche 1 bis 7, **gekennzeichnet durch** ein getrenntes Erfassen von ein- und austretenden Kommunikationsereignissen.

9. Verfahren nach einem der Ansprüche 1 bis 8, **dadurch gekennzeichnet, dass** das Erfassen der Kommunikationsereignisse in Abhängigkeit von ihrer Herkunft erfolgt.

10. Verfahren nach einem der Ansprüche 1 bis 9, **gekennzeichnet durch** den weiteren Schritt:
- Ermitteln der Differenz zwischen der Anzahl der ein- und ausgetretenen Kommunikationsereignisse.

11. Verfahren nach einem der Ansprüche 1 bis 10, **gekennzeichnet durch** den weiteren Schritt:
- Verteilen von Rechenleistung in dem Automatisierungssystem (1) in Abhängigkeit von der Kommunikationslast der Systemeinheit (3, 4, 6).

12. Verfahren nach Anspruch 11, **gekennzeichnet durch** ein Zuweisen von Rechenleistung zu der Systemeinheit (3, 4, 6) in Abhängigkeit von ihrer Kommunikationslast.

13. Verfahren nach einem der Ansprüche 1 bis 12, **gekennzeichnet durch** den weiteren Schritt:
- Beeinflussen der Anzahl eintreffender Kommunikationsereignisse in Abhängigkeit von der Kommunikationslast der Systemeinheit.

14. Automatisierungssystem (1) mit einer Vorrichtung zum Erfassen von in wenigstens einen einer Systemeinheit (3, 4, 6) des Automatisierungssystems (1) zugeordneten Kontrollraum (7, 8,...) eintretenden und/oder austretenden Kommunikationsereignissen zur Erfassung der Kommunikationslast der Systemeinheit (3, 4, 6).

15. Automatisierungssystem (1) nach Anspruch 14, **gekennzeichnet durch** eine Vorrichtung zum Verteilen von Rechenleistung in dem Automatisierungssystem (1) in Abhängigkeit von der Kommunikationslast der Systemeinheit (3, 4, 6).

16. Automatisierungssystem (1) nach Anspruch 14 oder 15, **gekennzeichnet durch** eine Vorrichtung zum Beeinflussen der Anzahl eintreffender Kommunikationsereignisse in Abhängigkeit von der Kommunikationslast der Systemeinheit (3, 4, 6).

17. Computerprogramm mit Rechenbefehlen zur Ausführung des Verfahrens nach einem der Ansprüche 1 bis 13, wenn das Programm auf einem Rechner ausgeführt wird.
